# EUROPÄISCHE PATENTSCHRIFT

(11) **EP 0 338 443 B1**
(45) Veröffentlichungstag und Bekanntmachung des Hinweises auf die Patenterteilung: **15.06.1994**
(21) Anmeldenummer: 89106684.7
(22) Anmeldetag: 14.04.1989
(51) Int. Cl.: F16B 5/06, E04B 1/61

(54) **Verbinder zum Verbinden zweier Bauelemente**
Connector for connecting two structural elements
Connecteur pour le raccordement de deux éléments

(30) Priorität: 17.06.1988 AT 1571/88; 16.04.1988 EP 88106117
(43) Veröffentlichungstag der Anmeldung: 25.10.1989
(73) Patentinhaber: Julius Blum Gesellschaft m.b.H., 6973 Höchst (AT)
(72) Erfinder: Röck, Erich, A-6973 Höchst (AT); Brüstle, Klaus, A-6923 Lauterach (AT); Dubach, Fredi, CH-8345 Adetswil (CH)
(74) Vertreter: Torggler, Paul, Dr.

(56) Entgegenhaltungen:
- WO-A-88/09851
- DE-A- 2 249 112
- DE-A- 3 405 571
- US-A- 3 236 487

## Beschreibung

Die Erfindung bezieht sich auf einen Beschlag mit zwei Beschlagteilen zum Verbinden zweier Bauelemente, vorzugsweise zum stirnseitigen Verbinden zweier Platten, wobei in jedes Bauelement im Verbindungsbereich ein Beschlagteil eingesetzt und mindestens eine Spannschraube od. dgl. vorgesehen ist, die jeweils in einem der Beschlagteile lagert und am anderen abgestützt ist und die in einer Spannrichtung eine die Beschlagteile verbindende Zugkraft ausübt, mit einer Verstelleinrichtung zur Einstellung der gegenseitigen Lage der Beschlagteile und somit der Bauelemente im wesentlichen senkrecht zur Spannrichtung.

Derartige Beschläge sind bereits in den verschiedensten Ausführungen bekannt. Insbesondere beim stirnseitigen Verbinden von Platten ist es wichtig, daß die Oberflächen genau in einer Ebene liegen, da auch eine geringe Stufe die Arbeit auf der Platte sehr behindern würde. Außerdem sind solche Stufen aus ästhetischen Gründen unvorteilhaft. Bei vielen Verbindern, die nur einen Zuganker aufweisen, konnten die Platten oder die Bauelemente nur durch mühsames und zeitaufwendiges Zurechtrücken in die richtige Lage gebracht werden.

Aus der US-A-3236487 ist ein Beschlag bekannt, bei dem die beiden Beschlagteile mittels einer horizontalen Spannschraube verbunden werden. In einem der Beschlagteile lagert eine Höhenverstellschraube, die auf den anderen Beschlagteil drückt. Durch Verdrehen der Höhenverstellschraube ist es daher möglich, die Höhenadjustierung der Platten in bezug aufeinander durchzuführen. Die herkömmlichen Verbinder haben den Nachteil, daß beim Zusammenbau der Platten seitlich, d.h. in der Zugrichtung der Spannschrauben relativ viel Platz vorhanden sein muß, da die Platten zuerst zumindestens ungefähr in eine gemeinsame horizontale Ebene gebracht werden müssen und dann erst die Stirnseite einer Platte an die Stirnseite der anderen Platte seitlich herangeführt wird.

Aufgabe der Erfindung ist es, einen Beschlag zu schaffen, mit dem die eine Platte unmittelbar neben der anderen Platte liegend an diese von oben herangeführt werden kann, sodaß während der Montage seitlich nicht mehr Platz beansprucht wird, als für die zusammengefügten Platten notwendig ist.

Eine weitere Aufgabe der Erfindung ist es, einen Beschlag der eingangs erwähnten Art dahin zu verbessern, daß die beiden Beschlagteile rasch und ohne Verwendung eines Werkzeugs zumindest provisorisch kuppelbar sind.

Die erfindungsgemäßen Aufgaben werden dadurch gelöst, daß in einem Beschlagteil ein elastischer oder elastisch beaufschlagter Riegelteil angeordnet ist, der bei zusammengesetzten Beschlagteilen bei der im anderen Beschlagteil gelagerten Verstelleinrichtung einrastet bzw. aufrastet.

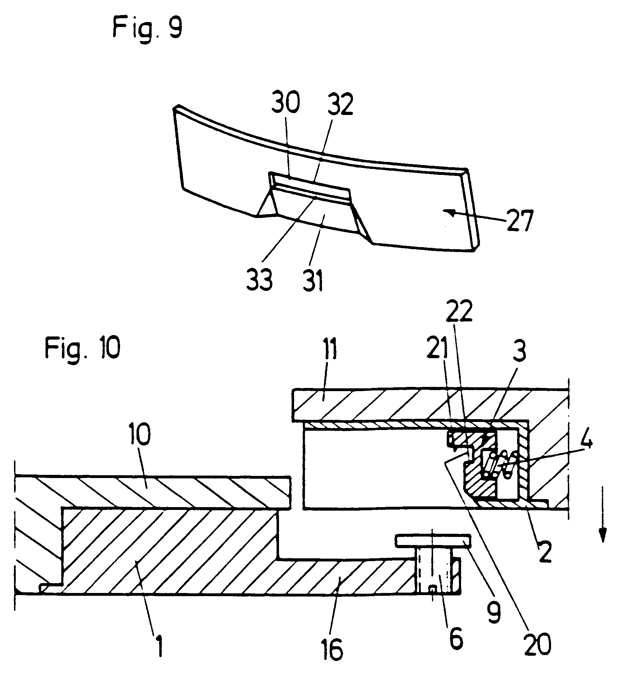

Damit ist es auch möglich, die eine Platte von oben heranzuführen und so in die Verbindungsstellung zu bringen. (Fig. 10) Der federnde Riegelteil kann zunächst entgegen einer Federkraft ausweichen und darauf bei der (Höhen)Verstelleinrichtung im anderen Beschlagteil einrasten bzw. aufrasten, worauf bereits die Möglichkeit einer gegenseitigen Einstellung der Platten gegeben ist.

Durch eine bevorzugte Ausbildung, bei der vorgesehen ist, daß der in einem Beschlagteil angeordnete Riegelteil bei in Verbindungsstellung befindlichen Beschlagteilen im wesentlichen in Richtung zum anderen Beschlagteil hin elastisch beaufschlagt bzw. vorgespannt ist, erreicht man auf einfache Weise eine in einem bestimmten Bereich von der Relativlage der beiden Beschlagteile in Spannrichtung unabhängige sichere "Verrastung" der Verstelleinrichtung mit dem Riegelteil. Bei Toleranzen in den Nachbearbeitungen der Stirnflächen und beim Zusammenspannen der Platten bleibt damit immer eine sichere Höhenverstellung gewährleistet. Es ist sogar möglich, die Platten leicht zusammenzuspannen, dann etwa durch Abfühlen mit dem Finer die richtige relative Höheneinstellung vorzunehmen, hierauf die Platten wieder etwas auseinanderzuschieben, um Klebstoff oder Silikon zwischen die Platten zu geben, und schließlich die Platten endgültig zusammenzuspannen. Bei solchen Bewegungen in Spannrichtung folgt der elastisch beaufschlagte Riegelteil der (Höhen)Verstelleinrichtung des anderen Beschlagteiles und stellt somit ein Aufrechterhalten der Höhenjustage sicher.

Vorteilhaft ist vorgesehen, daß die Verstelleinrichtung eine Schraube mit einem scheibenförmigen Kopf ist, an dem der Riegelteil angreift.

Ein Ausführungsbeispiel der Erfindung sieht vor, daß der Riegelteil ein in Zugrichtung nachgebendes Federblatt ist, das einen Schlitz aufweist, in dem der Kopf der Schraube mit seinem Rand einrastet.

Das Federblatt kann von zwei Stegen im Beschlagteil gehalten sein, die Schlitze aufweisen, in denen das Federblatt lagert.

Vorteilhaft ist vorgesehen, daß einer der Beschlagteile topfartig ausgeführt ist und am anderen Beschlagteil ein Fortsatz ausgebildet ist, der in den ersten Beschlagteil im wesentlichen senkrecht zur Spannrichtung einsetzbar ist.

Ein weiteres Ausführungsbeispiel der Erfindung sieht vor, daß der Riegelteil ein auf einer senkrechten Achse drehbar gelagerter und von einer Feder beaufschlagter Hebel ist.

Der Hebel ist im Beschlagteil vorteilhaft formschlüssig geführt, d.h. er kann weder nach oben noch nach unten ausweichen. Wenn nun der Hebel eine Einkerbung mit einer oberen und einer unteren Anschlagfläche aufweist, in welcher der Kopf der Schraube mit seinem Rand einrastet, so kann der Beschlagteil, in dem die Schraube lagert, durch Verdrehen der Schraube in bezug auf dem Beschlagteil, in dem der Hebel gelagert ist, in der Höhe verstellt werden.

Um das Aufdrücken des einen Beschlagteiles auf den anderen und das Ausweichen des Hebels zu erleichtern, ist vorteilhaft vorgesehen, daß der Hebel an seinem unteren Rand im Bereich der Schraube eine Schrägfläche aufweist, weil dann der Hebel zunächst automatisch zurückweicht und dann von selbst bei der Verstelleinrichtung ein- bzw. aufrastet.

Die Einkerbung ist in Draufsicht segmentartig.

Damit die beiden Beschlagteile des Beschlages auf einfache Art voneinander lösbar sind, ist in einem weiteren bevorzugten Ausführungsbeispiel der Erfindung ein Exzenter vorgesehen, mit dem der Hebel gegen den Federdruck schwenkbar und somit vom Kopf der Schraube, die einerseits den Höhenverstellteil und andererseits den Einrastteil bildet, abhebbar ist.

Vorteilhaft ist weiters vorgesehen, daß die Spannschraube und die Schraube der Verstelleinrichtung parallel zueinander ausgerichtet sind und die Spannschraube eine konische Spitze aufweist, mit der sie an eine Keilfläche des anderen Gehäuseteiles drückt.

Durch Einrasten bzw. Aufrasten des elastisch beaufschlagten bzw. elastischen Riegelteiles in die Verstelleinrichtung und gleichzeitiges Anliegen der Spannschraube od.dgl. an einer Schrägfläche des anderen Beschlagteiles kann man eine rasche provisorische Vorberbindung, von der aus noch eine Höhenjustierung und ein Zusammenspannen nötig ist, einfach und ohne Werkzeug erreichen.

Gemäß einer bevorzugten Ausführungsform ist vorgesehen, daß die Spannschraube und die Schraube der Verstelleinrichtung quer zur Spannrichtung der Beschlagteile nebeneinander angeordnet sind.

Man geht dabei davon aus daß zum Verbinden zweier Platten mindestens zwei Beschläge notwendig sind. Daher spielt es keine Rolle, wenn die Spannschraube außermittig angeordnet ist. Die auftretenden Drehmomente werden im Gesamtsystem ausgeglichen.

Weiters ist vorgesehen, daß die Beschlagteile topfförmig sind und mindestens einen Flansch mit einer oder mehreren Befestigungsschrauben aufweisen.

Nachfolgend werden zwei Ausführungsbeispiele der Erfindung anhand der Figuren der beiliegenden Zeichnungen eingehend beschrieben.

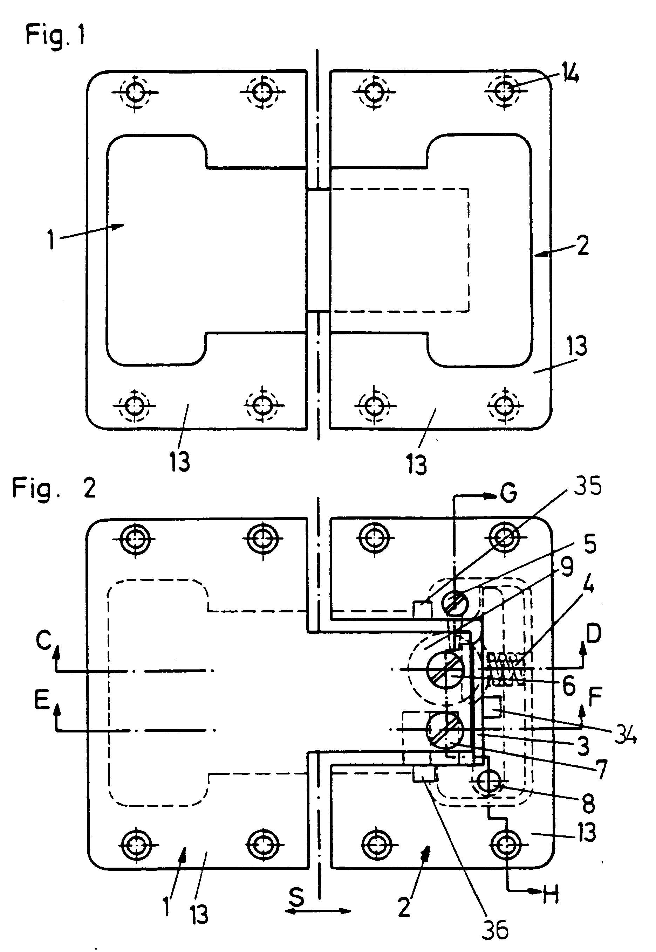

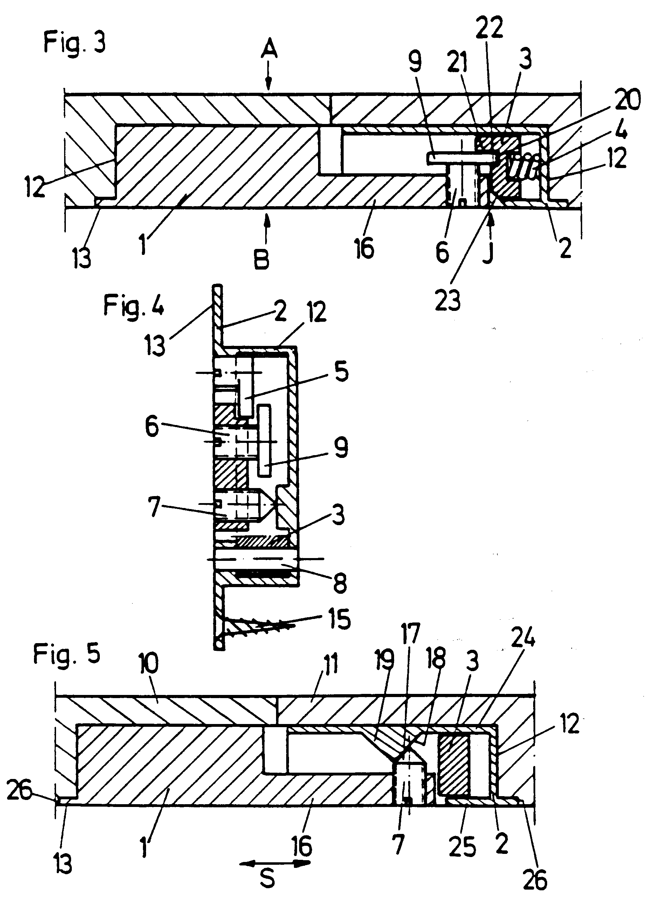

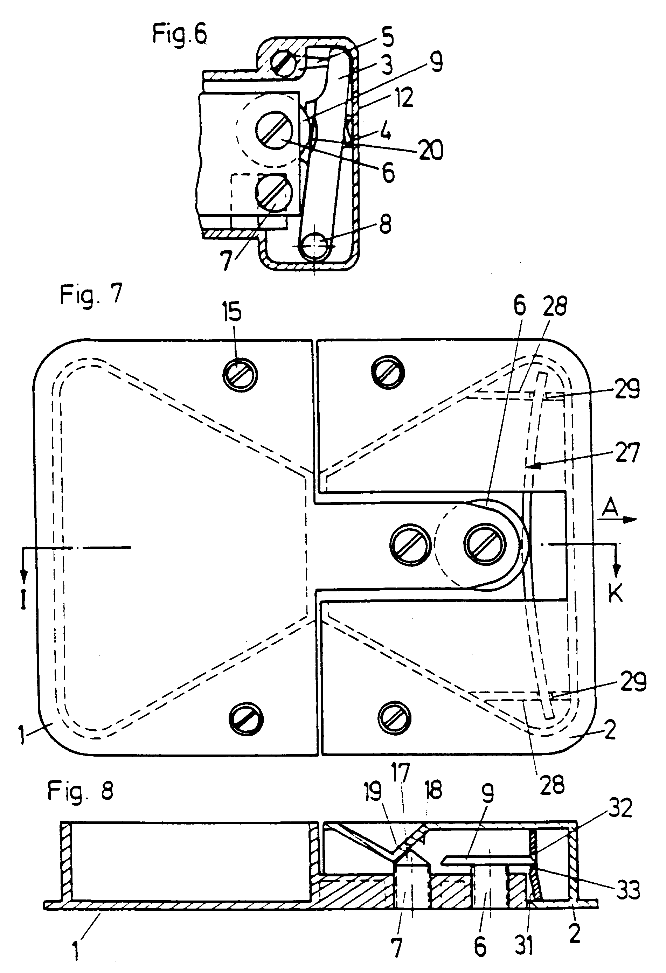

Die Fig. 1 zeigt eine Draufsicht auf einen erfindungsgemäßen Beschlag die Fig. 2 zeigt eine Ansicht von unten auf den erfindungsgemäßen Beschlag, die Fig. 3 zeigt einen Schnitt nach der Linie C-D der Fig. 2, die Fig. 4 zeigt einen Schnitt nach der Linie G-H der Fig. 2, die Fig. 5 zeigt einen Schnitt nach der Linie E-F der Fig. 2, die Fig. 6 zeigt die Ansicht J der Fig.3, die Fig. 7 zeigt eine Draufsicht auf ein weiteres Ausführungsbeispiel eines Beschlages die Fig. 8 zeigt einen Schnitt nach der Linie I-K der Fig. 7, die Fig. 9 zeigt schaubildlich das Federblatt und die Fig. 10 zeigt schematisch das Zusammensetzen zweier Bauelemente mit einem erfindungsgemäßen Beschlag.

Nachfolgend wird das Ausführungsbeispiel nach den Fig. 1 bis 6 beschrieben.

Der in den Figuren dargestellte Beschlag zur festen und exakten Verbindung der beiden Arbeitsplatten 10, 11 besteht aus den beiden Beschlagteilen 1,2, die jeweils in eine in die Arbeitsplatten 10,11 eingefräste Aussparung einsetzbar sind. Dabei sind die Beschlagteile 1,2 gehäuseförmig mit einem Topf 12 und einem Flansch 13 ausgeführt. In den Flanschen 13 befinden sich Löcher 14 für die Befestigungsschrauben 15. Der Beschlagteil 1 weist einen in den Beschlagteil 2 ragenden Fortsatz 16 auf, in dem die Spannschraube 7 sowie die Schraube 6, die die Verstelleinrichtung bildet, lagern.

Die Spannschraube 7 sowie die Schraube 6 sind dabei in Montagelage vertikal ausgerichtet, d.h. senkrecht zur Spannrichtung S, die im allgemeinen horizontal verläuft, um die beiden Platten 10,11 mit ihren Stirnseiten aneinander zu ziehen.

Die Spannschraube 7 ist daher mit einer konischen Spitze 17 versehen, die wie aus der Fig. 5 ersichtlich, an einer Keilfläche 18 eines Vorsprunges 19 des Beschlagteiles 2 anliegt. Je weiter die Spannschraube 7 in den Beschlagteil 1 hineingeschraubt wird, desto mehr werden die Beschlagteile 1 und 2 miteinander verspannt.

Die Schraube 6, die die Verstelleinrichtung bildet, dient außerdem noch der Verriegelung bzw. Kupplung der beiden Beschlagteile 1,2. Sie weist einen scheibenförmigen Kopf 9 auf.

Im Beschlagteil 2 lagert auf einem Lagerbolzen 8, der eine senkrechte Achse bildet, ein Hebel 3. Der Hebel 3 wird von einer Schraubenfeder 4 beaufschlagt.

Der Schraubenfeder 4 gegenüberliegend ist der Hebel 3 mit einer Einkerbung 20 versehen, die von einer oberen und unteren Anschlagfläche 21, 22 begrenzt wird. Die Einkerbung 20 ist in Draufsicht, wie insbesondere aus der Fig. 2 ersichtlich, segmentförmig.

Unten ist der Hebel 3 zumindestens im Bereich der Schraube 6 mit einer Schrägfläche 23 versehen.

Die Fig. 10 zeigt die Stellung, wie die beiden Platten 10, 11 zusammengefügt werden. Wird die Platte 11, wie der Pfeil in der Fig. 10 anzeigt, nach unten gedrückt, so drückt die Schraube 6 mit ihrem Kopf vorerst den Hebel 3 entgegen den Druck der Feder 4 zurück und der Beschlagteil 2 kann mit dem Hebel 3 soweit nach unten bewegt werden bis der Kopf 9 der Schraube in der Einkerbung 20 einrastet. Da gleichzeitig die Spannschraube 7 hinter dem Vorsprung 19 anliegt, sind die Beschlagteile 1,2 somit automatisch miteinander gekuppelt. Der Hebel 3 fungiert als Riegelteil. Ausgehend von dieser provisorischen Kupplungsstellung (Halteposition) kann die im folgenden beschriebene Höhenjustierung und darauf das Zusammenspannen der Platten erfolgen.

Da die Einkerbung 20,wie bereits erwähnt, eine obere und eine untere Anschlagfläche 21, 22 aufweist, ist der Kopf 9 der Schraube 6 formschlüssig im Hebel 3 gehalten. Durch Verdrehen der Schraube 6 kann nun der Beschlagteil 1 in bezug auf den Beschlagteil 1 nach oben oder nach unten bewegt werden.

Um die Stabilität des Beschlages zu erhöhen, ist der Hebel 3,wie in der Fig. 5 gezeigt, vorteilhaft zwischen zwei Platten 24,25, wobei die erstere den Boden des Gehäuses 12 bindet, ebenfalls formschlüssig gehalten.

Um den erfindungsgemäßen Beschlag leicht lösbar zu machen, ist im Beschlagteil 2 ein Exzenter 5 gelagert. Mittels des Exzenters 5 kann der Hebel 3, wie in der Fig. 6 gezeigt, entgegen den Druck der Schraubenfeder 4 seitlich vom Kopf 9 der Schraube 6 abgehoben werden, wodurch die Verbindung zwischen den beiden Beschlagteilen 1,2 gelöst ist.

Im gezeigten Ausführungsbeispiel sind die Flansche 13 der Beschlagteile 1,2 jeweils in einer Ausnehmung 26 der Platten 10,11 aufgenommen.

Im Ausführungsbeispiel nach den Fig. 7 bis 9 ist im Beschlagteil 2 anstelle des Hebels 3 ein Federblatt 27 angeordnet. Das Federblatt 27 wird dabei von Stegen 28 des Beschlagteiles 2 getragen, die Schlitze 29 aufweisen, in denen das Federblatt 27 lagert.

Wie in der Fig. 7 gezeigt, ist das Federblatt 27 zur Schraube 6 hin gebogen und kann in der Richtung des Pfeiles A ausweichen.

In diesem Ausführungsbeispiel befinden sich die Schraube 6, die die Verstelleinrichtung für die Höhenverstellung des Beschlages bildet und die Spannschraube hintereinander, d.h. in der Spannrichtung.

Die Spannschraube 7 drückt wiederum mit ihrer Spitze 17 auf die Keilfläche 18 des Vorsprunges 19 des Beschlagteiles 2.

Die Spannschraube 7 und die Schraube 6 sind wiederum in einem Fortsatz 16 des Beschlagteiles 1 gelagert.

Wie aus den Fig. der Zeichnung ersichtlich, ist das Federblatt 27 mit einem Schlitz 30 versehen. Unterhalb des Schlitzes 30 ist eine Schrägfläche 31 ausgebildet, die der Schrägfläche 23 des Hebels 3 entspricht.

Zur Montage bzw. zum Verbinden der Platten 10,11 werden diese wiederum wie in Fig. 10 gezeigt unmittelbar nebeneinander in der Höhe relativ zueinander verschoben.

Der Kopf 9 der Schraube 3 wandert dabei an der Schrägfläche 31 des Federplattes 27 entlang und drückt diese in der Richtung des Pfeiles A der Fig. 7 zurück, solange bis er im Schlitz 30 einrastet. Da die Schraube 7 wiederum gleichzeitig mit ihrem Spitz 17 am Vorsprung 19 anliegt, sind die beiden Beschlagteile 1,2 automatisch verriegelt. Anstelle des Schlitzes 30 könnte unter Umständen lediglich eine Vertiefung, d.h. wiederum eine Einkerbung analog zu dem zuvor beschriebenen Ausführungsbeispiel vorgesehen sein. Wichtig ist nur, daß der Kopf 9 nicht unbeabsichtigt aus dem Federblatt 27 herausrutschen kann.

Wie aus der Fig. 8 ersichtlich, ist der Kopf 9 zwischen den Kanten 32, 33 des Schlitzes 30 so eng gehalten, daß durch Verdrehen der Schraube 6 wiederum die Höhenverstellung der Beschlagteile 1,2 in bezug aufeinander möglich ist.

Die beiden Bauteile bzw. die beiden Beschlagteile 1,2 können in bzw. gegen die Spannrichtung S geringfügig verschoben werden, wobei der federnde Riegelteil 3 bzw. 27 einfach mitgeht und mit der Höhenverstelleinrichtung in Verbindung bleibt. Eine solche Verschiebung in Spannrichtung tritt beim Verspannen der Arbeitsplatten auf, wobei das Ausmaß der Verschiebung auch von der beispielsweise vom Monteur vorgenommenen Nachbearbeitung der Stirnflächen der Platten abhängen kann. Bei einer in der Praxis angewandten Montageweise ist die Aufrechterhaltung der Höhenjustage bei relativen Verschiebungen der Beschlagteile 1,2 bzw. Platten in bzw. gegen die Spannrichtung besonders vorteilhaft: Nach Vormontage aus der in Fig. 10 gezeigten Stellung, bei der der Riegelteil 3 in die Höhenverstelleinrichtung einschnappt bzw. aufschnappt (Teller 9 tritt in Nut 20 ein, Fig. 3) wird über die Spannschraube 7 leicht zusammengespannt. Hierauf folgt die exakte Höhenjustage durch Verdrehen der Höhenverstellschraube 6 (z.B. durch Fühlen des Stockes an der Plattenoberfläche mit dem Finger). Bevor nun die Platten endgültig miteinander verspannt werden, kann die Spannschraube 7 nochmals gelöst werden. Damit können die Platten durch Einführen und Verdrehen eines Verstellwerkzeuges (z.B. Schraubenzieherklinge) in die Ausnehmung 34 (Fig. 2) im Beschlagteil 2 wieder etwas voneinander getrennt werden, um Klebstoff oder Silikon in die Plattenfuge zu geben. Hierauf erfolgt das endgültige Zusammenspannen über die Spannschraube 7, wobei die zuerst vorgenommene Höheneinstellung aufrechterhalten bleibt. Beim Auseinanderbewegen der Platten entspannt sich die Feder 4 und sorgt dafür, daß der Hebel 3 (Riegelteil) immer am Teller 9 der Höhenverstellschraube 6 anliegt.

Um die Platten bzw. Beschlagteile 1,2 seitlich also in Stoßfugenrichtung einrichten zu können, sind zwei Ausnehmungen 35,36 im Beschlagteil 2 für geeignete Verstellwerkzeuge vorgesehen (Fig. 2), über der Vorsprung 16 des Beschlagteiles 1 relativ zum Beschlagteil 2 bewegbar ist.

Die Beschlagteile 1,2 sind vorteilhaft aus Kunststoff oder aus Druckguß gefertigt.

## Patentansprüche

1. Beschlag mit zwei Beschlagteilen (1, 2) zum Verbinden zweier Bauelemente, vorzugsweise zum stirnseitigen Verbinden zweier Platten (10, 11), wobei in jedes Bauelement im Verbindungsbereich ein Beschlagteil (1, 2) eingesetzt und mindestens eine Spannschraube (7) od. dgl. vorgesehen ist, die jeweils in einem der Beschlagteile (1, 2) lagert und am anderen abgestützt ist und die in einer Spannrichtung eine die Beschlagteile (1, 2) verbindende Zugkraft ausübt, mit einer Verstelleinrichtung zur Einstellung der gegenseitigen Lage der Beschlagteile (1, 2) und somit der Bauelemente im wesentlichen senkrecht zur Spannrichtung, dadurch gekennzeichnet, daß in einem Beschlagteil (2) ein elastischer oder elastisch beaufschlagter Riegelteil (3, 27) angeordnet ist, der bei zusammengesetzten Beschlagteilen (1, 2) bei der im anderen Beschlagteil (1) gelagerten Verstelleinrichtung einrastet bzw. aufrastet.

2. Beschlag nach Anspruch 1, dadurch gekennzeichnet, daß die Verstelleinrichtung höhenverstellbar ist.

3. Beschlag nach Anspruch 1 oder 2, dadurch gekennzeichnet, daß der in einem Beschlagteil (2) angeordnete Riegelteil (3,27) bei in Verbindungsstellen befindlichen Beschlagteilen (1,2) im wesentlichen in Richtung zum anderen Beschlagteil (1) hin elastisch beaufschlagt bzw. vorgespannt ist.

4. Beschlag nach einem der Ansprüche 1 bis 3, dadurch gekennzeichnet, daß die Verstelleinrichtung eine Schraube (6) mit einem scheibenförmigen Kopf (9) ist, an dem der Riegelteil angreift.

5. Beschlag nach Anspruch 1 und 4, dadurch gekennzeichnet, daß der Riegelteil ein vorzugsweise entgegen der Spannrichtung nachgebendes Federblatt (27) ist, das einen Schlitz (30) aufweist, in dem der Kopf (9) der Schraube (6) mit seinem Rand einrastet.

6. Beschlag nach Anspruch 5, dadurch gekennzeichnet, daß das Federblatt (27) von zwei Stegen (28) im Beschlagteil (2) gehalten wird, die Schlitze (29) aufweisen, in denen das Federblatt (27) lagert.

7. Beschlag nach Anspruch 5 oder 6, dadurch gekennzeichnet, daß das Federblatt (27) an seinem unteren Rand eine Schrägfläche (31) aufweist.

8. Beschlag nach einem der Ansprüche 1 bis 7, dadurch gekennzeichnet, daß einer der Beschlagteile (2) topfartig ausgeführt ist und am anderen Beschlagteil (1) ein Fortsatz (16) ausgebildet ist, der in den ersten Beschlagteil (2) im wesentlichen senkrecht zur Spannrichtung einsetzbar ist.

9. Beschlag nach Anspruch 1 und/oder 2, dadurch gekennzeichnet, daß der Riegelteil ein auf einer senkrechten Achse drehbar gelagerter und von einer Feder (4) beaufschlagter Hebel (3) ist.

10. Beschlag nach Anspruch 9, dadurch gekennzeichnet, daß der Hebel (3) im Beschlagteil (2) formschlüssig geführt ist.

11. Beschlag nach Anspruch 9 oder 10, dadurch gekennzeichnet, daß der Hebel (3) eine Einkerbung (20) mit einer oberen und einer unteren Anschlagfläche aufweist, in der der Kopf (9) der Schraube (6) mit seinem Rand einrastet.

12. Beschlag nach einem der Ansprüche 9 bis 11, dadurch gekennzeichnet, daß der Hebel (3) an seinem unteren Rand im Bereich der Schraube (6) eine Schrägfläche (23) aufweist.

13. Beschlag nach Anspruch 11, dadurch gekennzeichnet, daß die Einkerbung (20) in Draufsicht segmentförmig ist.

14. Beschlag nach einem der Ansprüche 9 bis 13, gekennzeichnet durch einen Exzenter (5), mit dem der Hebel (3) gegen den Druck der Feder (4) schwenkbar ist.

15. Beschlag nach den Ansprüchen 1 und 4, dadurch gekennzeichnet, daß die Spannschraube (7) und die Schraube (6) der Verstelleinrichtung parallel zueinander ausgerichtet sind und die Spannschraube (7) eine konische Spitze (17) aufweist, mit der sie an eine Keilfläche (18) des anderen Gehäuseteiles (2) drückt.

16. Beschlag nach Anspruch 1, dadurch gekennzeichnet, daß die Beschlagteile (1,2) topfförmig sind und mindestens einen Flansch (26) mit einer oder mehreren Befestigungsschrauben (15) aufweisen.

17. Beschlag nach den Ansprüchen 1 und 4, dadurch gekennzeichnet, daß die Spannschraube (7) und die Schraube (6) der Verstelleinrichtung quer zur Spannrichtung (S) der Beschlagteile (1,2) nebeneinander angeordnet sind.

## Claims

1. Fitting having two fitting parts (1, 2) for connecting two structural elements, preferably for connecting two plates (10, 11) end to end, a fitting part (1, 2) being inserted in each structural element in the connection region and there being provided at least one tensioning screw (7) or the like which is respectively mounted in one of the fitting parts (1, 2) and supported on the other and which, in a tensioning direction, exerts a tensile force connecting the fitting parts (1, 2), having an adjusting device for adjusting the mutual position of the fitting parts (1, 2) and thus of the structural elements in substantially perpendicular manner with respect to the tensioning direction, characterized in that there is arranged in one fitting part (2) a resilient or resiliently acted-upon bolt part (3, 27) which, when the fitting parts (1, 2) are joined, latches into or onto the adjusting device mounted in the other fitting part (1).

2. Fitting according to Claim 1, characterized in that the adjusting device is vertically adjustable.

3. Fitting according to Claim 1 or 2, characterized in that the bolt part (3, 27) arranged in one fitting part (2), when the fitting parts (1, 2) are located at connection points, is acted upon or pre-tensioned resiliently substantially in the direction of the other fitting part (1).

4. Fitting according to one of Claims 1 to 3, characterized in that the adjusting device is a screw (6) having a disc-shaped head (9) on which the bolt part acts.

5. Fitting according to Claim 1 and 4, characterized in that the bolt part is a spring leaf (27) which yields preferably in opposition to the tensioning direction and which has a slot (30) in which the head (9) of the screw (6) latches by means of its edge.

6. Fitting according to Claim 5, characterized in that the spring leaf (27) is held in the fitting part (2) by two webs (28) which have slots (29) in which the spring leaf (27) is mounted.

7. Fitting according to Claim 5 or 6, characterized in that the spring leaf (27) has an oblique surface (31) at its lower edge.

8. Fitting according to one of Claims 1 to 7, characterized in that one of the fitting parts (2) is of cup-like construction and there is constructed on the other fitting part (1) an extension piece (16) which can be inserted into the first fitting part (2) in substantially perpendicular manner with respect to the tensioning direction.

9. Fitting according to Claim 1 and/or 2, characterized in that the bolt part is a lever (3) which is mounted to be rotatable on a perpendicular axis and which is acted upon by a spring (4).

10. Fitting according to Claim 9, characterized in that the lever (3) is guided with form-fit in the fitting part (2).

11. Fitting according to Claim 9 or 10, characterized in that the lever (3) has a notch (20) with an upper and a lower stop surface, in which the head (9) of the screw (6) latches by means of its edge.

12. Fitting according to one of Claims 9 to 11, characterized in that the lever (3) has an oblique surface (23) at its lower edge in the region of the screw (6).

13. Fitting according to Claim 11, characterized in that the notch (20) is segment-shaped in plan view.

14. Fitting according to one of Claims 9 to 13, characterized by an eccentric (5) by means of which the lever (3) can be pivoted in opposition to the pressure of the spring (4).

15. Fitting according to Claims 1 and 4, characterized in that the tensioning screw (7) and the screw (6) of the adjusting device are aligned parallel to one another and the tensioning screw (7) has a conical tip (17) by means of which it presses against a wedge surface (18) of the other housing part (2).

16. Fitting according to Claim 1, characterized in that the fitting parts (1, 2) are cup-shaped and have at least one flange (26) with one or more securing screws (15).

17. Fitting according to Claims 1 and 4, characterized in that the tensioning screw (7) and the screw (6) of the adjusting device are arranged next to one another, as seen transversely with respect to the tensioning direction (S) of the fitting parts (1, 2).

## Revendications

1. Fermoir comprenant deux parties de fermoir (1, 2) pour assembler deux éléments, de préférence pour assembler deux plaques (10, 11) sur le côté frontal, une partie de fermoir (1, 2) étant insérée dans chaque élément dans la zone d'assemblage et au moins une vis de serrage (7) ou analogue étant prévue, laquelle vis est respectivement montée dans une des parties de fermoir (1, 2) et prend appui sur l'autre et exerce dans une direction de serrage une force de traction qui assemble les parties de fermoir (1, 2), comprenant un dispositif de réglage pour régler la position des parties de fermoir (1, 2) l'une par rapport à l'autre et partant celle des éléments pour l'essentiel perpendiculairement à la direction de serrage, **caractérisé** par le fait qu'une pièce de verrouillage (3, 27) élastique ou sollicitée élastiquement est disposée dans une partie de fermoir (2) et s'engage, lorsque les parties de fermoir (1, 2) sont assemblées, dans ou sur le dispositif de réglage monté dans l'autre partie de fermoir (1).

2. Fermoir selon la revendication 1, **caractérisé** par le fait que le dispositif de réglage est réglable en hauteur.

3. Fermoir selon la revendication 1 ou 2, **caractérisé** par le fait que la pièce de verrouillage (3, 27) disposée dans une partie de fermoir (2) est sollicitée élastiquement ou repoussée pour l'essentiel en direction de l'autre partie de fermoir (1) lorsque les parties de fermoir (1, 2) se trouvent en position d'assemblage.

4. Fermoir selon l'une des revendications 1 à 3, **caractérisé** par le fait que le dispositif de réglage est une vis (6) munie d'une tête (9) en forme de disque sur laquelle agit la pièce de verrouillage.

5. Fermoir selon les revendications 1 et 4, **caractérisé** par le fait que la pièce de verrouillage est un ressort à lame (27) flexible de préférence à l'opposé de la direction de serrage qui présente une fente (30) dans laquelle la tête (9) de la vis (6) s'engage avec son bord.

6. Fermoir selon la revendication 5, **caractérisé** par le fait que le ressort à lame (27) est maintenu par deux nervures (28) dans la partie de fermoir (2), qui présentent des fentes (29) dans lesquelles le ressort à lame (27) est logé.

7. Fermoir selon la revendication 5 ou 6, **caractérisé** par le fait que le ressort à lame (27) présente une surface oblique (31) au niveau de son bord inférieur.

8. Fermoir selon l'une des revendications 1 à 7, **caractérisé** par le fait que l'une des parties de fermoir (2) est réalisée en réceptacle et que l'autre partie de fermoir (1) comporte un prolongement (16) qui peut être inséré dans la première partie de fermoir (2) pour l'essentiel perpendiculairement à la direction de serrage.

9. Fermoir selon la revendication 1 et/ou 2, **caractérisé** par le fait que la pièce de verrouillage est un levier (3) monté rotatif sur un axe perpendiculaire et sollicité par un ressort (4).

10. Fermoir selon la revendication 9, **caractérisé** par le fait que le levier (3) est guidé dans la partie de fermoir (2) par complémentarité de formes.

11. Fermoir selon la revendication 9 ou 10, **caractérisé** par le fait que le levier (3) présente une encoche (20) qui comporte une surface de butée supérieure et inférieure et dans laquelle la tête (9) de la vis (6) s'engage avec son bord.

12. Fermoir selon l'une des revendications 9 à 11, **caractérisé** par le fait que le levier (3) présente une surface oblique (23) sur son bord inférieur, dans la région de la vis (6).

13. Fermoir selon la revendication 11, **caractérisé** par le fait que l'encoche (20) est en forme de segment en vue de dessus.

14. Fermoir selon l'une des revendications 9 à 13, **caractérisé** par un excentrique (5) avec lequel le levier (3) peut pivoter contre la pression du ressort (4).

15. Fermoir selon les revendications 1 et 4, **caractérisé** par le fait que la vis de serrage (7) et la vis (6) du dispositif de réglage sont orientées parallèlement l'une à l'autre et que la vis de serrage (7) présente une pointe (17) conique avec laquelle elle exerce une pression sur une surface en coin (18) de l'autre partie de fermoir (2).

16. Fermoir selon la revendication 1, **caractérisé** par le fait que les parties de fermoir (1, 2) sont en forme de réceptacle et présentent au moins une bordure (26) avec une ou plusieurs vis de fixation (15).

17. Fermoir selon les revendications 1 et 4, **caractérisé** par le fait que la vis de serrage (7) et la vis (6) du dispositif de réglage sont disposées l'une à côté de l'autre transversalement à la direction de serrage (S) des parties de fermoir (1, 2).
